Europäisches Patentamt

European Patent Office

Office européen des brevets

(11) Veröffentlichungsnummer: **0 453 705 A2**

## (12) EUROPÄISCHE PATENTANMELDUNG

(21) Anmeldenummer: **91100301.0**

(22) Anmeldetag: **11.01.91**

(51) Int. Cl.5: **G02B 6/12**

(30) Priorität: **21.04.90 DE 4012747**

(43) Veröffentlichungstag der Anmeldung:
**30.10.91 Patentblatt 91/44**

(84) Benannte Vertragsstaaten:
**DE FR GB IT**

(71) Anmelder: **Bodenseewerk Gerätetechnik GmbH**
**Alte Nussdorfer Strasse 15 Postfach 1120**
**W-7770 Überlingen/Bodensee(DE)**

(72) Erfinder: **Froning, Edilbert**
Bodanstrasse 23
**W-7772 Oberuhldingen(DE)**
Erfinder: **Langner, Klaus**
**Alte Dorfstrasse 61**
**W-7770 Überlingen(DE)**

(74) Vertreter: **Wolgast, Rudolf, Dipl.-Chem. Dr. et al**
**Dipl.-Phys. Jürgen Weisse Dipl.Chem. Dr. Rudolf Wolgast Bökenbusch 41 Postfach 11 03 86**
**W-5620 Velbert 11 Langenberg(DE)**

(54) **Verfahren zur Herstellung von feinoptischen Stirnflächen an Wellenleitern.**

(57) Ein Verfahren zur Herstellung von feinoptischen Stirnflächen an Wellenleitern, bei denen die Stirnfläche des in einem Substrat gebildeten Wellenleiters durch mechanische Bearbeitung mikroskopisch kleine Brüche aufweist, ist gekennzeichnet durch die Verfahrensschritte: Anlegen eines Körpers (20) mit einer feinoptischen Oberfläche an das Substrat (10) vor die Stirnfläche des Wellenleiters (12), Einbringen eines Klebers (22) in den Zwischenraum zwischen der Stirnfläche des Wellenleiters (12) und der feinoptischen Oberfläche des Körpers (20), und Erhärtenlassen des Klebers (22).

Fig.6

EP 0 453 705 A2

Die Erfindung betrifft ein Verfahren zur Herstellung von feinoptischen Stirnflächen an Wellenleitern, bei denen die Stirnfläche des in einem Substrat gebildeten Wellenleiters durch mechanische Bearbeitung mikroskopisch kleine Brüche aufweist.

Es besteht das Problem, bei einer integrierten Optik Licht aus einem solchen Wellenleiter auf Bauteile, z.B. einen photoelektrischen Detektor, zu leiten oder von einer Lichtquelle, z.B. einem Halbleiterlaser, in einen Wellenleiter einzuspeisen. Dabei muß das Licht aus der Stirnfläche des Wellenleiterendes austreten oder in diese Stirnfläche eintreten.

Bei der mechanischen Bearbeitung von Glassubstratkanten werden mikroskopisch kleine Brüche erzeugt. Durch diese wird das austretende Licht gestreut. Um die Streuung zu verhindern wird das Wellenleiterende mit üblichen Mitteln poliert. Das ist eine sehr aufwendige Prozedur, die spezielles Fachpersonal erfordert.

In vielen Fällen ist es erwünscht, Wellenleiter im Inneren der integrierten Optik mit Bauteilen zu koppeln. Zu diesem Zweck können mit einem diamantbesetzte Scheibenfräser kleine Schlitze in das Substrat gefräst werden. Die Seitenwandungen dieser Schlitze bilden ebenfalls rauhe Bruchkanten. Diese innenliegenden Bruchkanten können aber nicht poliert werden und wären daher als Koppelstelle unbrauchbar.

Der Erfindung liegt die Aufgabe zugrunde, ein einfaches und wirkungsvolles Verfahren zur Herstellung von feinoptischen Stirnflächen an Wellenleitern zu schaffen.

Erfindungsgemäß wird diese Aufgabe gelöst durch die folgenden Verfahrensschritte:

(a) Anlegen eines Körpers mit einer feinoptischen Oberfläche an das Substrat vor die Stirnfläche des Wellenleiters,

(b) Einbringen eines Klebers in den Zwischenraum zwischen die Stirnfläche des Wellenleiters und der feinoptischen Oberfläche des Körpers und

(c) Erhärtenlassen des Klebers.

Es wird so die zerklüftete Bruchkante an der Stirnfläche des Wellenleiters mit einer Kleberschicht "ausgegossen", die ihrerseits eine glatte Oberfläche besitzt. Es hat sich gezeigt, daß sich mit diesen Mitteln ein sauberer Ein- und Austritt des Lichts durch die Stirnfläche des Wellenleiters erreichen läßt.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

Fig.1    zeigt eine Draufsicht auf das Ende eines Lichtleiters, der unter der Oberfläche eines Substrats aus Glas verläuft und an seiner Stirnfläche eine zerklüftete Bruchkante bildet.

Fig.2    zeigt eine zugehörige Seitenansicht.

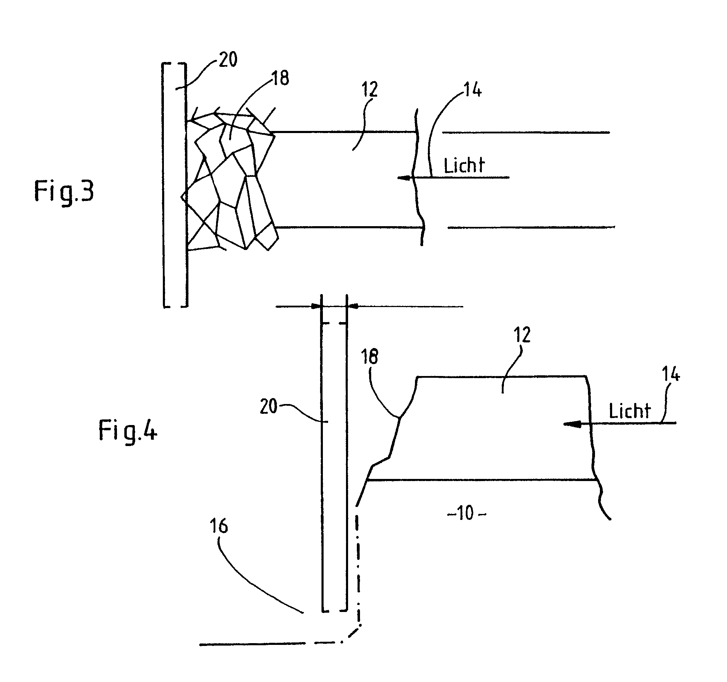

Fig.3    zeigt in einer Draufsicht ähnlich Fig.1 das Ansetzen eines Mikroskopdeckglases an die Stirnfläche des Wellenleiters.

Fig.4    zeigt eine zugehörige Seitenansicht.

Fig.5    zeigt in einer Draufsicht ähnlich Fig.1 und 3 das Einbringen eines Klebers in den Zwischenraum zwischen der Stirnfläche des Wellenleiters und dem Mikroskopdeckglas.

Fig.6    zeigt eine zugehörige Seitenansicht.

Fig.7    zeigt eine Draufsicht des Endes des Wellenleiters mit einer durch den Kleber geglätteten Stirnfläche nach Entfernen des Mikroskopdeckglases.

Fig.8    zeigt eine zugehörige Seitenansicht.

Mit 10 ist ein Substrat aus Glas bezeichnet. Unter der Oberfläche des Substrats 10 ist ein Wellenleiter 12 gebildet. Der Wellenleiter 12 ist ein sich längs eines Weges erstreckender Bereich von etwa kreisförmigem Querschnitt, in welchem ein gegenüber dem Brechungsindex des Substrats 10 erhöhter Brechungsindex vorhanden ist. In einem solchen Wellenleiter wird Licht durch Totalreflexion geführt, wie durch den Pfeil 14 dargestellt ist. In das Substrat 10 ist eine Nut 16 eingefräst. In dieser Nut soll ein elektrooptischer Bauteil, z.B. eine Photodiode oder ein Halbleiterlaser, eingesetzt werden. Dieser Bauteil soll mit dem Wellenleiter 12 optisch gekoppelt werden.

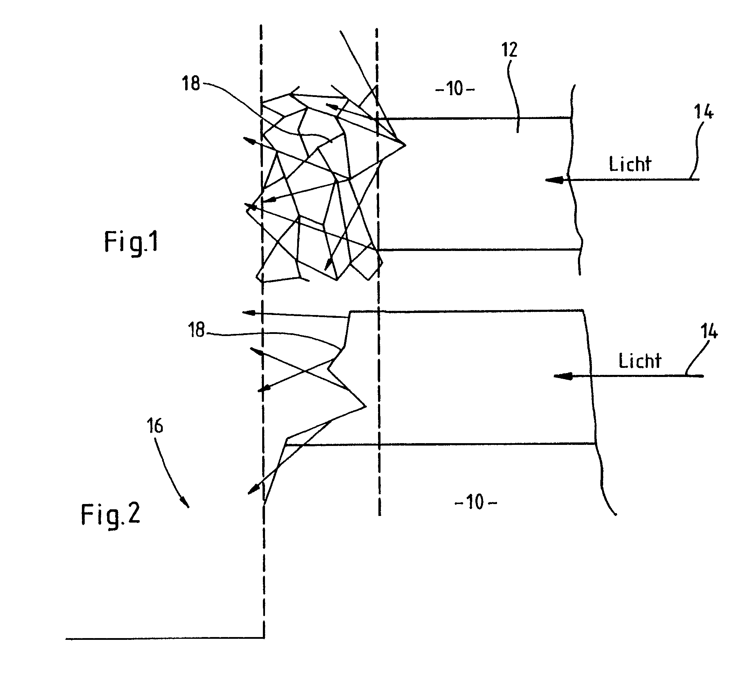

Die Stirnfläche des Wellenleiters 12 bildet eine unregelmäßige Bruchkante 18. Wie in Fig.1 und 2 angedeutet ist, wird das in dem Wellenleiter 12 geführte Licht an dieser Bruchkante 18 unregelmäßig gebrochen und gestreut. Eine saubere Ankopplung des Wellenleiters 12 an z.B. eine Photodiode ist dadurch nicht möglich.

Aus diesem Grunde wird vor die unregelmäßige Stirnfläche des Wellenleiters 12 ein Körper mit 20 einer glatten Oberfläche gedrückt. Als ein solcher Körper hat sich ein gezogenes Glas in Form eines Mikroskopdeckglases bewährt. Gezogene Gläser haben eine Flammenpolitur, die hohe Güte in der Feinstruktur besitzt. Ein Mikroskopdeckglas hat eine Dicke von etwa 0,15 mm. Das Mikroskopdeckglas kann daher bequem in eine gefräste Nut von 0,5 mm Breite eingeführt werden. Der Körper 20 wird mit geeigneten Mitteln an die unregelmäßige Stirnfläche des Wellenleiters 12 angedrückt.

Zweckmäßigerweise ist das Mikroskopdeckglas mit einem Trennmittel beschichtet.

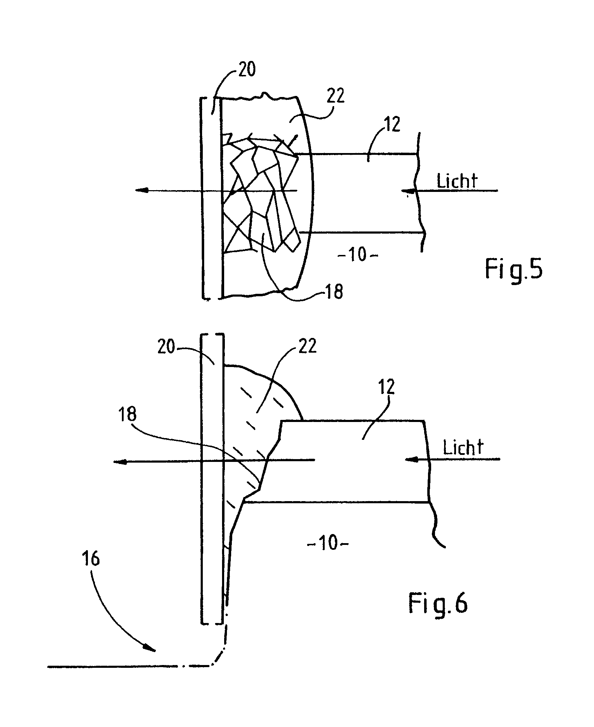

Es wird dann, wie in Fig.5 und 6 dargestellt ist, ein flüssiger Kleber 22 in den Zwischenraum zwischen dem Mikroskopdeckglas und der Stirnfläche des Wellenleiters eingebracht. Das kann mittels einer Nadel oder eines Mikrodosierers geschehen. Der Kleber 22 wird dabei durch die Kapillarkräfte im den engen Zwischenraum hineingezogen. Der Kleber ist ein niedrigbrechender Kleber, dessen Brechungsindex an den Brechungsindex des Wellenleiters 12 angepaßt ist. Der Kleber 22 ist UV-härtend. Er wird durch UV-Bestrahlung ausgehärtet.

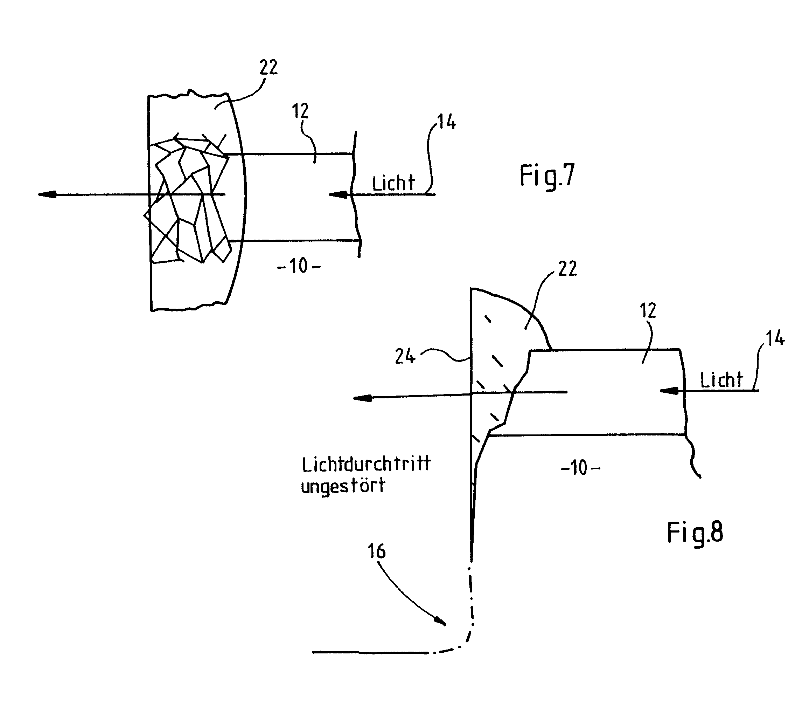

Nach der Härtung wird das Mikroskopdeckglas abgenommen. Das Abnehmen wird durch das Trennmittel erleichtert. Es ergibt sich dann die in Fig.7 und 8 dargestellte Struktur. Der Kleber bildet eine glatte Oberfläche 24. Durch die Adhäsion des Klebers 22 steht die gebildete Kante etwas nach oben vor. Der Wellenleiter 12 endet praktisch ohne Brechungsindexsprung im Kleber 22.

Das in dem Wellenleiter 12 geführte Licht tritt an der glatten Oberfläche 24 des Klebers ohne Streuung oder diffuse Brechung aus. Es ist unkritisch, wenn die Oberfläche 24 geringfügig gegen die Achse des Wellenleiters 12 versetzt ist.

An der glatten Oberfläche 24 wird eine direkte Ein- oder Auskopplung des Lichts möglich.

Das gleiche Verfahren ist auch bei gesägten, gebrochenen, geschnittenen oder gefrästen Außenkanten von Substraten anwendbar. Der hier nach dem Stand der Technik erforderliche Aufwand kann vermieden werden.

## Patentansprüche

1. Verfahren zur Herstellung von feinoptischen Stirnflächen an Wellenleitern, bei denen die Stirnfläche des in einem Substrat gebildeten Wellenleiters durch mechanische Bearbeitung mikroskopisch kleine Brüche aufweist,

   **gekennzeichnet durch die Verfahrensschritte:**
   (a) Anlegen eines Körpers (20) mit einer feinoptischen Oberfläche an das Substrat (10) vor die Stirnfläche des Wellenleiters (12),
   (b) Einbringen eines Klebers (22) in den Zwischenraum zwischen der Stirnfläche des Wellenleiters (12) und der feinoptischen Oberfläche des Körpers (20) und
   (c) Erhärtenlassen des Klebers (22).

2. Verfahren nach Anspruch 1, **dadurch gekennzeichnet, daß** der Körper (20) nach dem Erhärten des Klebers entfernt wird.

3. Verfahren nach Anspruch 1 oder 2, **dadurch gekennzeichnet, daß** als Kleber ein niedrigbrechender Kleber verwendet wird.

4. Verfahren nach einem der Ansprüche 1 bis 3, **dadurch gekennzeichnet, daß** der Körper (20) ein gezogenes Glas, z,B. ein Mikroskopdeckglas, ist.

5. Verfahren nach einem der Ansprüche 1 bis 4, **dadurch gekennzeichnet, daß** die mechanische Bearbeitung aus einem Fräsvorgang besteht.

6. Verfahren nach einem der Ansprüche 1 bis 5, **dadurch gekennzeichnet, daß** der Kleber durch Kapillarkräfte in den Spalt zwischen der Bruchkante (18) und der Oberfläche des Körpers (20) eingebracht wird.

7. Verfahren nach einem der Ansprüche 1 bis 6, **dadurch gekennzechnet, daß** als Kleber ein UV-härtender Kleber benutzt wird.

8. Verfahren nach einem der Ansprüche 1 bis 7, **dadurch gekennzeichnet, daß** auf die Oberfläche des Körpers (20) ein Trennmittel aufgebracht wird, welches nach dem Erhärten des Klebers das Lösen dieser Oberfläche von der Oberfläche des erhärteten Klebers gestattet.

Fig.1

18

–10–

12

Licht

14

Fig.2

18

16

Licht

14

–10–

EP 0 453 705 A2

Fig.3

Fig.4

Fig.5

Fig.6

22

12

14

Licht

**Fig.7**

– 10 –

EP 0 453 705 A2

22

12

24

14

Licht

Lichtdurchtritt
ungestört

– 10 –

16

**Fig.8**